# EUROPEAN PATENT APPLICATION

(11) **EP 3 148 244 A1**
(43) Date of publication of application: **29.03.2017**
(21) Application number: 15306491.0
(22) Date of filing: 24.09.2015
(51) Int. Cl.: H04W 24/02, H04W 36/14, H04W 92/02, H04W 36/00

(54) **METHOD AND DEVICE FOR PROVIDING INFORMATION REPRESENTATIVE OF WLAN ACCESS POINTS OR NETWORKS, CONNECTED TO A WLAN TERMINATION POINT, TO BASE STATIONS**

(71) Applicant: ALCATEL LUCENT, 92100 Boulogne-Billancourt (FR)
(72) Inventor: GODIN, Philippe, 91620 Nozay (FR)
(74) Representative: Novagraaf Technologies

(57) **Abstract**

A method is intended for providing information representative of WLAN access points (1₁-1₃) and/or WLAN access networks, connected to a WLAN termination point (2), to base stations (3₁-3₃). This method comprises:
- a first step of receiving at a first base station (3₁), having established a connection with this WLAN termination point (2), a list, comprising WLAN access point identifier(s) and/or WLAN access network identifier(s), from this WLAN termination point (2), and
- a second step of sending from this first base station (3₁) the received list with a communication identifier of the WLAN termination point (2) to at least one neighbor base station (3₂), so that the latter (3₂) is able to establish a connection with this WLAN termination point (2) when a user equipment (5) it serves reports a detection of a WLAN access point (1₃) or network the identifier of which belongs to the received list.

## Description

### Field of the Invention

The present invention relates to neighbor relations between base stations of a mobile (or wireless) communication network and a Wireless Local Area Network (or WLAN).

### Background

As known by those skilled in the art, when a mobile user equipment is temporarily served by a first base station and reports to the latter one measurement of a detected cell of a second base station that is still unknown to the first base station, the latter one tries to automatically set this second base station as a neighbor and possibly set up an X2 interface connection with it. In the case of an LTE network the base stations are called evolved Node Bs (or e-UTRAN Node Bs or else eNBs).

To achieve this automatic X2 interface setup, a mechanism, called Automatic Neighbor Relation (ANR) in the case of an LTE network, is implemented. The first eNB asks a (mobile) user equipment to read and report the evolved Cell Global Identifier (ECGI) of a cell of the second eNB to derive its identifier (eNB2 ID) and query for an IP address corresponding to this eNB2 ID. The query relies on the S1 interface and more precisely on the Evolved Packet Core (or EPC) which knows the eNB2 ID and can thus relay the request from the first eNB towards the second eNB over the S1 interface, and also transmit the reply including the IP address of the second eNB from the second eNB towards the first eNB over the S1 interface. Then the first eNB uses the IP address of the second eNB to set up an X2 interface connection with it.

To further improve connection possibilities of user equipments, it would be of great interest that base stations be also capable of establishing connections with neighbor WLAN access points. But, the ANR mechanism (described above and allowing automatic connections between base stations) can not be used for establishing automatically connections between base stations and neighbor WLAN access points. This is notably due to the fact that WLAN access points are hidden behind a logical node (called a WLAN termination point) that serves them as an interworking node with the base stations. Indeed, when a base station becomes aware that a neighbor WLAN access point has been detected (for instance by a served user equipment detecting the BSSID broadcasted by this WLAN access point or the HESSID of the WLAN access network the base station belongs to), this base station must first identify the WLAN termination point which interworks with this detected WLAN access point. Then the serving base station must use the communication identifier (generally an IP address) of the identified WLAN termination point to set up a base station-WLAN termination point interface (called Xw in a LTE network).

Unfortunately, the query over the S1 interface cannot be used to retrieve the IP address of the WLAN termination point, because it has been decided that the LTE-WLAN Aggregation (or LWA) feature should work without relying on the WLAN side (i.e. the WLAN termination point) connected to the EPC. Therefore, even if the WLAN termination point could be identified, there is no way for a base station to contact it via the S1 interface to get its IP address in reply.

To allow automatic connections between base stations and a WLAN termination point it could be possible to implement a method based on DNS look up. But such a method is complex and the ANR standards have tried to avoid resorting to a DNS mechanism. It could be also possible to implement an operating & maintenance (or O&M) method. But it is cumbersome to configure and update all the nodes everytime a new WLAN access point or a new base station (pico NB or Home eNB) is being added or switched off or e.g. everytime a WLAN access point would be moved from one WLAN termination point to another.

### Summary

In a first embodiment, a method is intended for providing information representative of WLAN access point(s) and/or WLAN access network(s), connected to a WLAN termination point, to base stations, and comprises:
- a first step of receiving at a first base station, having established a connection with this WLAN termination point, a list, comprising at least one WLAN access point identifier and/or at least one WLAN access network identifier, from this WLAN termination point, and
- a second step of sending from this first base station this received list with a communication identifier of this WLAN termination point to at least one neighbor base station, so that the at least one neighbor base station is able to establish a connection with this WLAN termination point when a user equipment served by this neighbor base station reports a detection of a detected WLAN access point or WLAN access network the identifier of which belongs to this received list.

For instance, during the second step the first base station may send the received list with the communication identifier of the WLAN termination point to each one of its neighbor base stations.

Also for instance, in the second step each neighbor base station of the first base station may send the recieved list and communication identifier of the WLAN termination point to each one of its own neighbor base stations.

Also for instance, the method may comprise a third step of sending from the WLAN termination point an update of the list to each base station having establish a connection with it.

In a second embodiment, a computer program product comprises a set of instructions arranged, when executed by processing means, for performing the method presented above for providing information representative of WLAN access point(s) and/or WLAN access network(s), connected to a WLAN termination point, to evolved Node Bs.

In a third embodiment, a device, is intended for equipping a base station having established a connection with a WLAN termination point connected to at least one WLAN access point and/or at least one WLAN access network, and comprising:
- a reception trigger for triggering reception from this WLAN termination point of a list, comprising at least one WLAN access point identifier and/or at least one WLAN access network identifier, by its base station, and
- a transmission trigger for triggering transmission by its base station of this received list with a communication identifier of said WLAN termination point to at least one neighbor base station, so that the at least one neighbor base station is able to establish a connection with this WLAN termination point when a user equipment served by this neighbor base station reports a detection of a detected WLAN access point or WLAN access network the identifier of which belongs to this received list.

For instance, this transmission trigger may be arranged for triggering transmission by its base station of the received list with the communication identifier of the WLAN termination point to each one of the neighbor base stations of its base station.

Also for instance, this transmission trigger may be arranged, when its base station has received a list with a communication identifier of a WLAN termination point from a neighbor base station, for triggering transmission by its base station of this received list with the communication identifier of this WLAN termination point to each one of the neighbor base stations of its base station.

In a fourth embodiment, a base station comprises a device such as the one above introduced.

### Brief Description of the Figures

Embodiments of the present invention are now described, by way of example only, and with reference to the accompanying drawings, in which:
- Figure 1 schematically and functionally illustrates three evolved Node Bs located in the vicinity of a WLAN termination point to which are connected three WLAN access points, and a user equipment connected to one of the evolved Node Bs, and
- Figure 2 schematically illustrates a sequence diagram comprising arrows representing steps of an example of embodiment of a method according to the invention.

### Description of Embodiments

Hereafter is notably disclosed a method intended for providing information representative of WLAN access point(s) 1ⱼ and/or WLAN access network(s), connected to a WLAN termination point 2, to base stations 3ₖ of a wireless (or mobile) communication network.

In the following description it will be considered that the wireless (or mobile) communication network is a 4G network, such as a 3GPP LTE ("Long Term Evolution") network. So, the base stations 3ₖ are evolved Node Bs (or eNBs). But the invention is not limited to this kind of wireless (or mobile) communication network and could apply to other wireless communication networks such as 3G communication networks where 3G NodeBs or 3G RNCs ("Radio Network Controllers") play the role of evolved NodeBs.

Moreover in the following description it will be considered that the WLAN access point(s) 1ⱼ and/or WLAN access network(s) and the WLAN termination point 2 belongs to a WiFi network. But the invention is not limited to this kind of WLAN and could apply to any wireless technology in which access points are able to broadcast over the air an identifier of the access point and/or an identifier of the access network to which this access point belongs to.

Moreover, in the following description it will be considered that there are only WLAN access points connected to the WLAN termination point 2. But the WLAN termination point 2 could be connected to WLAN access point(s) and/or to WLAN access network(s).

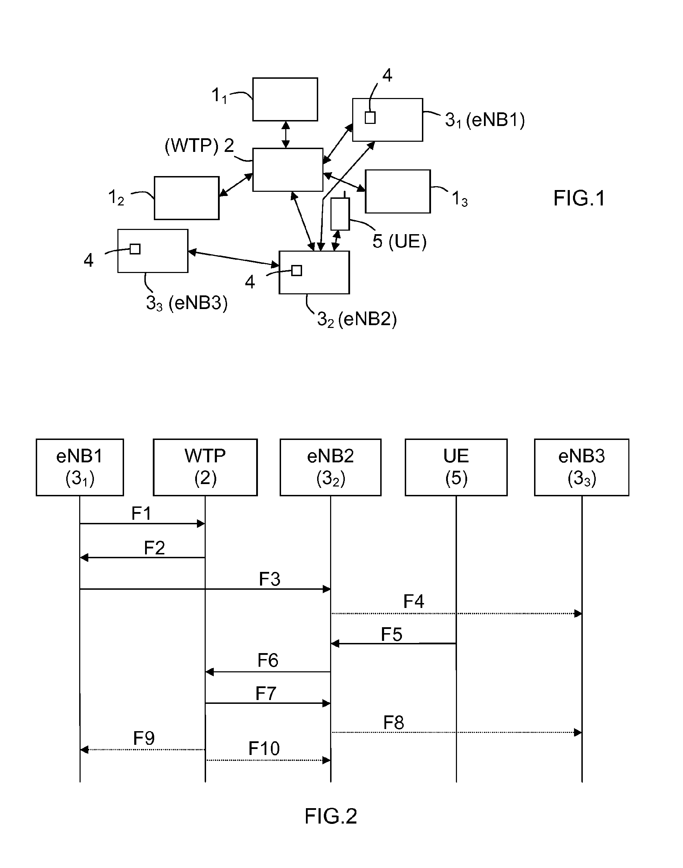

A very small part of a 4G mobile communication network and a very small part of a WLAN, located in the vicinity of the 4G network part (and therefore sharing at least partly the same geographical area), are illustrated in Figure 1. The 4G network part comprises three base stations (here evolved Node Bs) 3₁, 3₂ and 3₃ (k = 1 to 3), and the WLAN part comprises a WLAN termination point (or WTP) 2 to which are connected three WLAN access points (or WAPs) 1₁, 1₂ and 1₃ (j = 1 to 3). These evolved Node Bs 3ₖ are neighbors of each others and therefore are connected therebetween via X2 interface connections.

The functionalities of eNBs 3ₖ, WTP 2 and WAPs 1ⱼ are well known by the man skilled in the art. So, they will not be described in this document.

As mentioned before, the invention notably proposes a method intended for providing information representative of WLAN access point(s) 1ⱼ and/or WLAN access network(s) connected to a WLAN termination point 2, to evolved Node Bs 3ₖ. This method comprises at least two steps.

A first step of this method is initiated when a first evolved Node B (for instance 3₁ (or eNB1)) has established a connection with the WLAN termination point 2, via an Xw interface connection. So, eNB1 knows the communication identifier of the WLAN termination point 2 (for instance an Internet Protocol (or IP) address).

In this case, the first evolved Node B 3₁ (or eNB1) receives a list, comprising at least one identifier of WLAN access point 1ⱼ and/or at least one identifier of WLAN access network connected to the WLAN termination point 2, from the latter one (2). These identifiers may be BSSIDs ("Basic Set Service IDentifiers") or HESSIDs ("Homogeneous Extended Set Service Identifiers"), for instance.

It is important to note that the first evolved Node B 3₁ (or eNB1) may receive the list from the termination point 2 by several ways: either on request or included in a reply message corresponding to another request (e.g. a request to setup the Xw interface between eNB1 and the WTP), or spontaneously (i.e. without requesting it). In the following description it will be considered that the first evolved Node B 3₁ (or eNB1) retrieves the list from the termination point 2.

To this effect and as illustrated in the example method sequence diagram shown in Figure 2, eNB1 may send a Xw setup request to the WLAN termination point 2 (arrow F1), and the WLAN termination point 2 may send a Xw setup response comprising a list of WLAN access point identifiers (or BSSIDs) to eNB1 (arrow F2). It could also send a list of WLAN access network identifiers at this stage.

This first step may be partly implemented by a device 4 equipping each eNB 3ₖ. In other words, each of the base stations 3ₖ includes a respective device 4. More precisely, each device 4 comprises a reception trigger arranged for triggering reception from the WLAN termination point 2 of a list of WLAN access point identifier(s) and/or WLAN access network identifier(s) by its evolved Node B 3ₖ.

Such a device 4 is preferably made of software modules, at least partly. But it could be also made of a combination of hardware and software modules. In a case where it is made of software modules it can be stored in a memory, possibly after having been downloaded, or in any computer software product. In other embodiments, the device 4 may be a circuit or other apparatus.

In the second step of the method, the first evolved Node B 3₁ sends (or transmits) the received list with the communication identifier of the WLAN termination point 2 (here its IP address) to at least one neighbor evolved Node B 3_{k'} (here k' = 2 or 3). This information transmission is performed via the X2 interface connection established between eNB1 and eNB2 (or eNB3), as illustrated by arrow F3 in Figure 2. With this WLAN termination point IP address, the neighbor evolved Node B 3_{k'} (for instance 3₂) is able to establish a connection with the WLAN termination point 2 when a mobile user equipment (or UE) 5 it serves reports a detection of a WLAN access point 1ⱼ or a WLAN access network the identifier of which belongs to the received list it has received. This report is made by means of a message typically comprising the BSSID of the detected WLAN access point 1ⱼ or the HESSID of the WLAN access network.

This second step may be also partly implemented by the device 4 that equips the concerned evolved Node B 3ₖ (here 3₁). More precisely, the device 4 comprises a transmission trigger arranged for triggering transmission by its evolved Node B 3ₖ of the received list with the communication identifier of the WLAN termination point 2 to at least one neighbor evolved Node B 3_{k'} (with k' ≠ k).

For instance a (mobile) user equipment 5 may be a 4G smartphone. But it can be any type of wireless communication equipment capable of establishing communications with other wireless communication equipments or network equipments via at least one wireless (or mobile) communication network comprising evolved Node Bs. So, a user equipment 5 may be also a tablet or a laptop, for instance.

Once an eNB 3_{k'} has received a list of WLAN access point identifiers and/or WLAN access network identifiers and the communication identifier of the associated WLAN termination point 2 from one of its eNB neighbors, it is ready to establish a Xw interface connection with the WLAN termination point 2. So, it may proceed immediately to this Xw interface connection establishment, or may wait for a message emanating from a user equipment 5 it serves and reporting a detection of a WLAN access point 1ⱼ or a WLAN access network (whose identifier was present in the received list) that it has detected in its vicinity. This last alternative is illustrated in Figure 2. More precisely, in the non-limiting example illustrated in Figure 2, a user equipment (or UE) 5 sends a request comprising the identifier (BSSID) of a detected WLAN access point 1ⱼ (for instance 1₃) to its serving eNB 3ₖ (here eNB2) (arrow F5). It is considered in this example that the identifier (BSSID) of the detected WLAN access point 1₃ belongs to the list of identifiers received by the serving eNB2. So, this serving eNB2 sends a Xw setup request to the WLAN termination point 2 (arrow F6), and the WLAN termination point 2 sends a Xw setup response (possibly comprising the list of WLAN access point identifiers (or BSSIDs) or WLAN access network identifiers (or HESSIDs)) to eNB2 (arrow F7). After this Xw interface setup, eNB2 is ready to participate with the WLAN termination point 2 to a connection between eNB2 and the detected WLAN access point 1₃.

In order to render the method more efficient and therefore increase the connectivy of the user equipment 5 as quickly as possible, the information (list and WTP communication identifier) may be automatically propagated between eNB neighbors via their X2 interface connections. So, the number of evolved Node Bs 3ₖ knowing the communication identifier of the WLAN termination point 2 that serves the WLAN access point 1ⱼ located in their vicinity increases rapidly. To this effect, during the second step the first evolved Node B 3₁ may send, optionnaly but preferably, the received list with the communication identifier of the WLAN termination point 2 to each one of its neighbor evolved Node Bs (here 3₂ and 3₃).

In order to render the method also more efficient for the reason mentioned in the preceding paragraph, during the second step each neighbor evolved Node B 3_{k'} (here 3₂ and 3₃) of the first evolved Node B 3ₖ (here 3ᵢ) may send, optionnaly but preferably, the list and the WLAN termination point communication identifier recieved from the first evolved Node B 3₁ to each one of its own neighbor evolved Node Bs. These information transmissions are performed via the X2 interface connections established between eNB2 and its neighbor evolved Node Bs 3_{k'} (here eNB3), but also via the X2 interface connections established between eNB3 and its neighbor evolved Node Bs 3_{k"} (with k" ≠ 1, 2 and 3). An example of such an information transmission between eNB2 and eNB3 is illustrated by the optional arrow F4 (in dotted line) in the non-limiting example of Figure 2.

This information propagation may be limited, for instance by the use of a dedicated flag. In this case the value of the flag indicates how many eNB neighbor levels are still concerned by the information propagation. So when the flag value becomes equal to 0 the concerned eNB stops the information propagation towards its own neighbors unless it receives a message reporting a detection of a WLAN access point 1ⱼ or a WLAN access network from a mobile user equipment 5 it serves, and therefore becomes a new first eNB (as eNB1 in the illustrated example).

It is important to note that in a variant of embodiment also illustrated in Figure 2, the transmissions of the received list of identifiers and WLAN termination point communication identifier between an eNBk' neighbor of eNB1 (for instance eNB2) and the other eNBk" neighbors of eNBk' (for instance eNB3) can be performed once eNBk' has established a Xw interface connection with the WLAN termination point 2. An example of such an information transmission between eNB2 and eNB3 is illustrated by the optional arrow F8 (in dotted line) in the non-limiting example of Figure 2.

Moreover, and as illustrated in the non-limiting example of Figure 2, the method according to the invention may further comprise a third step of sending from the WLAN termination point 2 an update of its list of WLAN access point identifiers and/or WLAN access network identifiers to each evolved Node B 3ₖ having establish a connection (Xw interface) with it. An example of such update transmissions between the WLAN termination point 2 and eNB1 and eNB2 is illustrated by the optional arrows F9 and F10 (in dotted line) in the non-limiting example of Figure 2.

Upon receiving a list update (e.g. WLAN termination point communication identifier and/or new added WLAN access point(s) and/or new added WLAN access points network(s)), a base station may send this list update to its neighbor base stations which can in turn, for instance, establish a connection with the identified WLAN termination point in case a user equipment served by one of these latter neighbor base stations happens to detect a newly added WLAN access point or network.

Embodiments of the invention provide an automatic neighbor relation mechanism applicable to LTE-WLAN (and notably LTE-WiFi) and which allows automatic setup of eNB-WTP Xw interfaces, for instance whenever a user equipement reports to its serving eNB that it has detected a BSSID of a neighbor WAP connected to a WTP or a HESSID of a neighbor WLAN access network connected to a WTP.

So, embodiments of the invention avoid the big burden of configuration of WTP IP address and list of BSSIDs in all the eNBs (the WTP information only needs to be known into a first eNB and the Xw interface connections between eNBs and this WTP are automatically setup thanks to the WTP information propagation). Moreover, automatic updates of the eNBs-WTP connections can be performed based on WTP information updates, which could not be (easily) achieved by an operating & maintenance (or O&M) method. Moreover, embodiments of the invention provide an EUTRAN network based solution that does not need to rely on DNS mechanisms.

The functions of the various elements shown in the figures may be provided through the use of dedicated hardware as well as hardware capable of executing software in association with appropriate software.

It should be appreciated by those skilled in the art that any block diagrams herein represent conceptual views of illustrative circuitry embodying the principles of the invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for providing information representative of WLAN access point(s) (1ⱼ) and/or WLAN access network(s), connected to a WLAN termination point (2), to base stations (3ₖ), said method comprising i) a first step of receiving at a first base station (3₁), having established a connection with said WLAN termination point (2), a list, comprising at least one WLAN access point identifier and/or at least one WLAN access network identifier, from said WLAN termination point (2), and ii) a second step of sending from said first base station (3₁) said received list with a communication identifier of said WLAN termination point (2) to at least one neighbor base station (3₂), so that said at least one neigbor base station (3₂) is able to establish a connection with said WLAN termination point (2) when a user equipment (5) served by said neighbor base station (3₂) reports a detection of a WLAN access point (1₃) or a WLAN access network the identifier of which belongs to said received list.

2. Method according to claim 1, wherein in said second step said first base station (3₁) sends said received list with said communication identifier of said WLAN termination point (2) to each one of its neighbor base stations (3₂-3₃).

3. Method according to one of claims 1 and 2, wherein in said second step each neighbor base station (3₂-3₃) of said first base station (3₁) sends said recieved list and communication identifier of said WLAN termination point (2) to each one of its own neighbor base stations.

4. Method according to one of claims 1 to 3, comprising a third step of sending from said WLAN termination point (2) an update of said list to each base station (3ₖ) having establish a connection with said WLAN termination point (2).

5. Computer program product comprising a set of instructions arranged, when executed by processing means, to perform the method for providing information representative of WLAN access point(s) (1ⱼ) and/or WLAN access network(s), connected to a WLAN termination point (2), to base stations (3ₖ) according to one of the preceding claims.

6. Device (4) for a base station (3ₖ) having established a connection with a WLAN termination point (2) connected to at least one WLAN access point (1ⱼ) and/or at least one WLAN access network, said device (4) comprising i) a reception trigger arranged for triggering reception from said WLAN termination point (2) of a list, comprising at least one WLAN access point identifier and/or at least one WLAN access network identifier, by said base station (3ₖ), and ii) a transmission trigger for triggering transmission by said base station (3ₖ) of said received list with a communication identifier of said WLAN termination point (2) to at least one neighbor base station (3ₖ), so that the at least one neighbor base station (3_{k'}) is able to establish a connection with said WLAN termination point (2) when a user equipment (5) served by said neighbor base station (3ₖ) reports a detection of a WLAN access point (1ⱼ) or a WLAN access network the identifier of which belongs to said received list.

7. Device according to claim 6, wherein said transmission trigger is arranged for triggering transmission by said base station (3ₖ) of said received list with said communication identifier of said WLAN termination point (2) to each one of the neighbor base stations (3ₖ) of said base station (3ₖ).

8. Device according to one of claims 6 and 7, wherein said transmission trigger is arranged, when said base station (3ₖ) has received a list with a communication identifier of a WLAN termination point (2) from a neighbor base station, for triggering transmission by said base station (3ₖ) of said received list with said communication identifier of said WLAN termination point (2) to each one of the neighbor base stations (3_{k'}) of said base station (3ₖ).

9. Base station (3ₖ) comprising a device (4) according to one of claims 6 to 8.
